# EUROPEAN PATENT APPLICATION

(11) **EP 3 632 570 A1**
(43) Date of publication of application: **08.04.2020**
(21) Application number: 18809504.6
(22) Date of filing: 15.05.2018
(51) Int. Cl.: B03C 3/41, B03C 3/40, B03C 3/49, F01N 3/01

(54) **DISCHARGE ELECTRODE OF ELECTROSTATIC PRECIPITATOR FOR TREATING DIESEL ENGINE EXHAUST GAS**

(30) Priority: 31.05.2017 JP 2017108773
(71) Applicant: Usui Co., Ltd., Sunto-gun Shizuoka 411-8610 (JP)
(72) Inventor: FURUGEN, Munekatsu, Nishinomiya-shi Hyogo 662-0875 (JP); MAKINO, Tadashi, Takatsuki-shi Osaka 569-1020 (JP); TAKIKAWA, Kazunori, Numazu-shi Shizuoka 410-0037 (JP); ICHIKAWA, Junichi, Sunto-gun Shizuoka 411-8610 (JP)
(74) Representative: Hoppe, Lars
(86) International application number: PCT/JP2018/018790
(87) International publication number: WO 2018/221207

(57) **Abstract**

Provided is discharge electrodes of an electrostatic precipitator for treating diesel engine exhaust gas, in which initial charging to PM, exfoliation of PM, charging after exfoliation, repetition of exfoliation and charging, and so forth are easily performed to reliably collect PM and consumption power can be reduced while the voltage applied to the electrodes is ensured, by changing spacing between the discharge electrodes in the axial direction (spacing in the flow direction of exhaust gas) on the upstream side and the downstream side in each tubular collecting module. The discharge electrodes of a diesel engine exhaust gas treatment apparatus in a multistage-type precipitation wall structure in which a plurality of tubular collecting modules each formed of an electrostatic precipitation part are disposed in a main collecting pipe in the pipe axial direction, wherein the spacing between the electrodes of each tubular collecting module in the axial direction(spacing in the flow direction of exhaust gas) is arranged to be wide on the upstream side in each tubular collecting module and to be narrow on the downstream side therein to make a weak-average-electric-field electrode part on the upstream side in each tubular collecting module and a strong-average-electric-field electrode part on the downstream side therein.

## Description

### Technical Field

The present invention relates to an electrical exhaust gas treatment technology using corona discharge in a diesel engine such as an engine for marine, for electric power generation, for general industry, or the like and, in particular, to discharge electrodes of an electrostatic precipitator for treating exhaust gas of a diesel engine which discharges exhaust gas at high temperatures using fuel oil as a fuel.

### Background Art

As a motive power source for various marines, electric power generators, large construction equipment, and furthermore, various automobiles and so forth, a diesel engine has been widely adopted. PM included in exhaust gas discharged from the diesel engine not only causes air pollution, as well known, but also is a substance extremely poisonous to the human body. Thus, purification of that exhaust gas is extremely important. Therefore, numerous suggestions have already been made, such as an improvement of diesel engine combustion schemes, adoption of various exhaust gas filters, and methods of electrical treatment using corona discharge, and have been partially put into practice.

As a technique of electrical treatment for PM included in exhaust gas discharged from a diesel engine, using corona discharge, for example, an apparatus described in PTLs 1 and 2 has been suggested by the present applicant.

A diesel engine exhaust gas treatment apparatus using a fuel lower in quality than fuel oil described in PTL 1 is, as in Figure 14 depicting its example of structure, configured broadly of an electrostatic precipitation part 101 provided to collect PM particles and a cyclone-type separation/collecting means 102. The electrostatic precipitation part 101 is formed of collecting modules at three stages formed of a main collecting pipe 101-1 configuring a precipitation electrode of a tubular collecting part 101-1 and having a single diameter and a predetermined length, a small-diameter collecting pipe 111-1A-1, an intermediate-diameter collecting pipe 111-1B-1, and a large-diameter collecting pipe 111-1C-1 common to the main collecting pipe 101-1; and a small-diameter collecting part 111-1A, an intermediate-diameter collecting part 111-1B, and a large-diameter collecting part 111-1C, including discharge electrodes 101-2 for charging PM contained in exhaust gas. The main collecting pipe 101-1 configuring a precipitation electrode has connected consecutively thereto an exhaust gas introduction pipe part 101-1a at an end part on an upstream side, a PM-low-concentration exhaust gas delivery pipe 103 near an axial center of an end part on a downstream side, and a PM-high-concentration exhaust gas delivery part 101-1b near an inner circumferential surface of the end part on the downstream side.

The cyclone-type separation/collecting means 102 provided between the downstream side and the upstream side of the electrostatic precipitation part 101 in a flow direction of the exhaust gas is configured of a cyclone collecting part 102-1 as a separation means and a recirculation piping 102-2 from the cyclone collecting part 102-1. This cyclone collecting part 102-1 is configured of one tangential cyclone 102-1a connected via a communication pipe 105-1 and a PM-high-concentration exhaust gas piping 105-2 to the PM-high-concentration exhaust gas delivery part 101-1b provided near the inner circumferential surface on the downstream side of the main collecting pipe 101-1 of the electrostatic precipitation part 101. Furthermore, disposed between the tangential cyclone 102-1a and the exhaust gas introduction pipe 101-1a on the upstream side of the main collecting pipe 101-1 of the electrostatic precipitation part 101 are the recirculation piping 102-2 and a communication pipe 105-3 for merging purified gas after passage of the tangential cyclone 102-1a with exhaust gas flowing in the exhaust gas introduction pipe 101-1a. A blower 107 is provided to the PM-high-concentration exhaust gas piping 105-2 between the communication pipe 105-1 and the tangential cyclone 102-1a, and is provided to give kinetic energy to the exhaust gas flow to increase the pressure and speed, thereby reliably pump and recirculate the exhaust gas flow to the exhaust gas introduction pipe 101-1a. To the PM-low-concentration exhaust gas introduction pipe 103, a damper 108 is provided to perform flow rate adjustment as to the PM-high-concentration exhaust gas inflow amount and inflow speed and the PM-low-concentration exhaust gas emission amount for the tangential cyclone 102-1a.

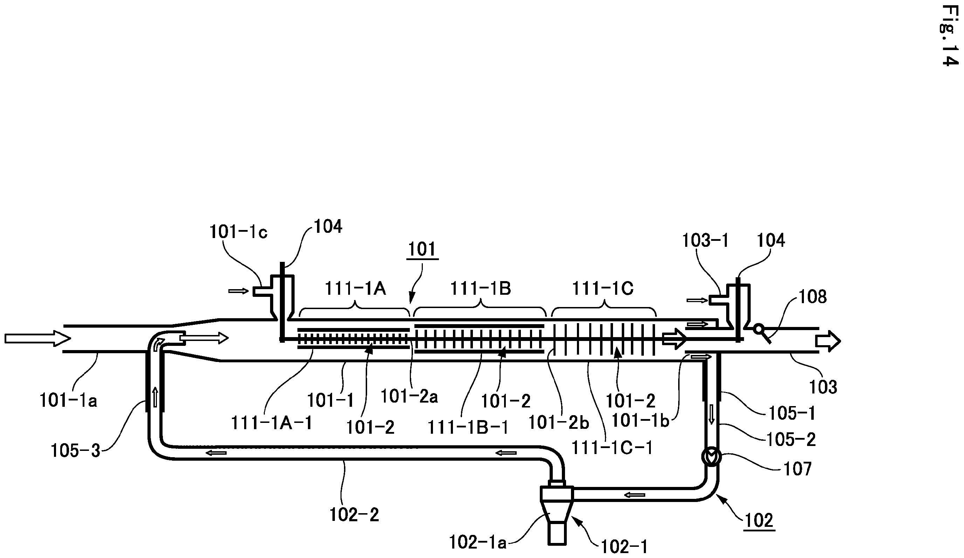

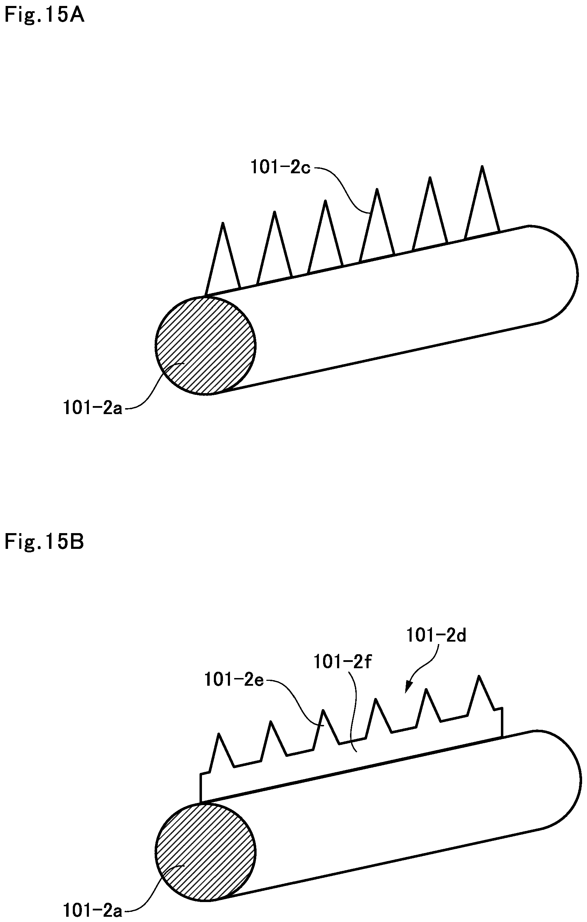

As a pattern of each electrode installed in each collecting module of the above-described diesel engine exhaust gas treatment apparatus, various discharge electrodes are present. Examples are a discharge electrode configured of electrode needles 101-2b radially protruding on one common electrode rod 101-2a depicted in Figure 14, a discharge electrode configured of saw-blade-shaped discharge plates 101-2c protruding on one common electrode rod 101-2a and each having an approximately isosceles triangle depicted in Figure 15(A), and a discharge electrode configured of saw-blade-shaped discharge electrode plates 101-2d with saw-blade-shaped discharge plate parts (mountain parts) 101-2e protruding on one common electrode rod 101-2a and provided integrally with a substrate part 101-2f depicted in Figure 15(B). In any of these cases, a spacing of electrodes (such as the electrode needles 101-2b and the saw-blade-shaped discharge electrode plate 101-2d) in the axial direction is constantly provided.

Also, the electrostatic precipitator for treating diesel engine exhaust gas described in PTL 2 is configured so that, as in Figure 16 depicting its example of structure, in a diesel engine exhaust gas treatment apparatus in a multistage-type precipitation wall structure. In the structure, tubular collecting modules arranged in a main collecting pipe 201 are of a three-stage type including a small-diameter collecting part 201-1, an intermediate-diameter collecting part 201-2, and a large-diameter collecting part 201-3, from an upstream side of a tubular collecting part. In addition, discharge electrodes 201-2A-1 and 201-3A-1 configured of short discharge electrode needles or low-height saw-blade-shaped discharge electrode plates, similar to the above, are arranged in the intermediate-diameter collecting part 201-2 and the large-diameter collecting part 201-3 except the small-diameter collecting part 201-1. The discharge electrodes 201-2A-1 arranged in an intermediate-diameter collecting pipe 201-2A of the intermediate-diameter collecting part 201-2 is formed of a discharge electrode support barrel 201-2A-1d having discharge electrode needles 201-2A-1c radially arranged in a circumferential direction and a pipe axial direction on an outer circumference of a main electrode (electrode rod) 202. The discharge electrode support barrel 201-2A-1d is configured to be attached concentrically with the main electrode 202 via a plurality of stays 201-2A-1e. The discharge electrode 201-3A-1 arranged in a large-diameter colleting pipe 201-3A common to the main collecting pipe 201 of the large-diameter collecting part 201-3 is formed of a discharge electrode support barrel 201-3A-1d having discharge electrode needles 201-3A-1c radially arranged in the circumferential direction and the pipe axial direction on the outer circumference of the main electrode (electrode rod) 202 similarly to the discharge electrode support barrel 201-2A-1d of the discharge electrodes 201-2A-1 arranged in the intermediate-diameter collecting pipe 201-2A. The discharge electrode support barrel 201-3A-1d is configured also to be attached concentrically with the main electrode 202 via a plurality of stays 201-3A-1e. Note that discharge electrodes 201-1A-1 arranged in a small-diameter colleting pipe 201-1A of the small-diameter collecting part 201-1 are configured to be provided with short discharge electrode needles 201-1A-1c radially arranged on the outer circumference of the main electrode 202.

However, the discharge electrodes 101-2, 201-1A-1, 201-2A-1, and 201-3A-1, the saw-blade-shaped discharge plates 101-2c directly protruding on the electrode rod 101-2a, or the saw-blade-shaped discharge electrode plates 101-2d with the saw-blade-shaped discharge plate parts (mountain parts) 101-2e provided integrally with the substrate part 101-2f in the conventional diesel engine exhaust gas purification apparatus (multistage type) described above have the problems, as will be described below. That is, for example, in the case of the discharge electrode needles depicted in Figure 14, the discharge electrode configured of the electrode needles 101-2b radially protruding on one common electrode rod 101-2a, a constant (equidistant) disposition spacing with respect to the flowing direction of the exhaust gas is made for the discharge electrode configured of the saw-blade-shaped discharge plates 101-2c protruding on one common main electrode (electrode rod) 101-2a and each having an approximately isosceles triangle depicted in Figure 15(A), and the discharge electrode configured of the saw-blade-shaped discharge electrode plate 101-2d protruding on one common main electrode (electrode rod) 101-2a and having the saw-blade-shaped discharge plate parts (mountain parts) 101-2e provided integrally with the substrate part 101-2f depicted in Figure 15(B). Thus, the electric field at the tip of the discharge electrode in each collecting module is approximately constant with respect to the flowing direction of the exhaust gas, and the PM collection situation is also hardly changed with respect to the flowing direction of the exhaust gas. However, to ensure a high applied voltage to keep a collection ratio, a large current is required, and power consumption is significant. Moreover, even if the discharge electrode needles 201-2A-1c or the low-height saw-blade-shaped discharge electrode plates 101-2d are set with a predetermined density and radially provided on the outer circumference of the cylindrical discharge electrode support barrels 201-2A-1d and 201-3A-1d attached to the outer circumference of the main electrode depicted in Figure 14, Figure 15(A), and Figure 15(B), each disposing spacing with respect to the flow direction of the exhaust gas is constant as the above. Thus, also in this case, the electric field at the tip of the discharge electrode needles or the low-height saw-blade-shaped discharge electrode plate in each collecting module is approximately constant with respect to the flowing direction of the exhaust gas, and the PM collection situation is also hardly changed with respect to the flowing direction of the exhaust gas. However, to ensure a high applied voltage to keep a collection ratio, a large current is required, and power consumption is significant. Therefore, both of the techniques have a problem in which, to ensure a high applied voltage to keep the collection ratio over the full length of each collecting module, a large current is required, and power consumption is significant.

### Citation List

### Patent Literature

PTL 1: Japanese Patent Application No. 2014-238086
PTL 2: Japanese Patent Application Laid-Open No. 2017-952

### Summary of Invention

### Technical Problem

The present invention has been made to solve the problems in the discharge electrodes of the conventional diesel engine exhaust gas purification apparatus (multistage type) described above, and to provide discharge electrodes of an electrostatic precipitator for treating diesel engine exhaust gas in which, by changing spacing between the discharge electrodes in an axial direction (spacing in a flow direction of exhaust gas) depending on an upstream side and a downstream side of each tubular collecting module, repetition of initial charging to PM, exfoliation of PM, recharging after exfoliation, re-charging again after re-exfoliation, and so forth are easily performed to reliably collect PM, and an applied voltage is ensured and a discharge current is decreased while an average electric field intensity at a colleting wall is kept, thereby enabling to reduce the consumption power.

### Solution to Problems

The inventors performed a preliminary analysis and a preliminary experiment to find out discharge electrodes of an electrostatic precipitator for treating exhaust gas of a marine diesel engine capable of ensuring PM collection and reducing consumption power by ensuring an applied voltage and decreasing a discharge current while keeping an average electric field intensity at a collecting wall. In this preliminary analysis and preliminary experiment, various discharge characteristics in accordance with differences in patterns of the discharge electrodes of the electrostatic precipitator for treading exhaust gas of the marine diesel engine were compared to investigate tendencies of power consumption. In the following, the preliminary analysis and the preliminary experiment will be described.

### [I] Preliminary Analysis

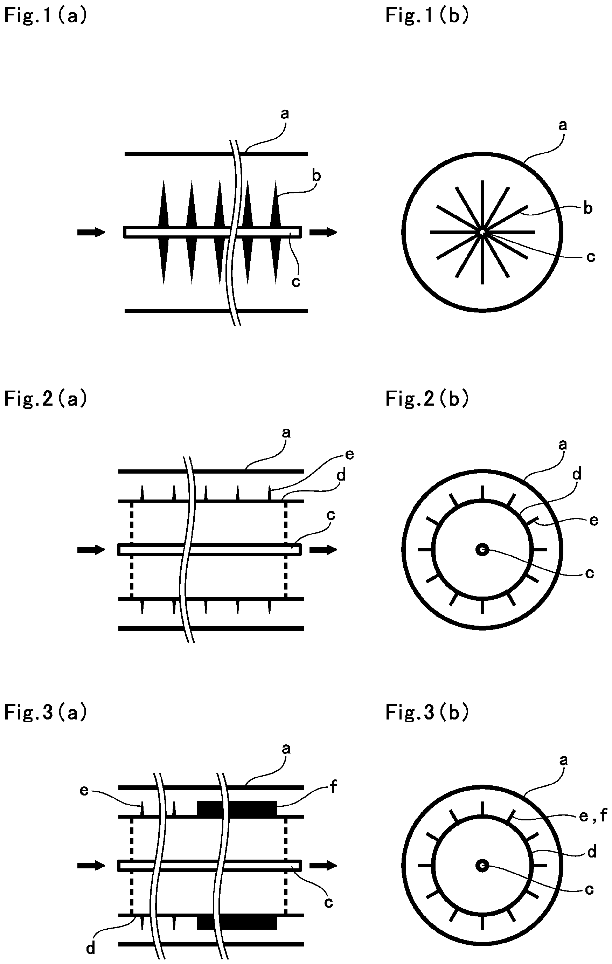

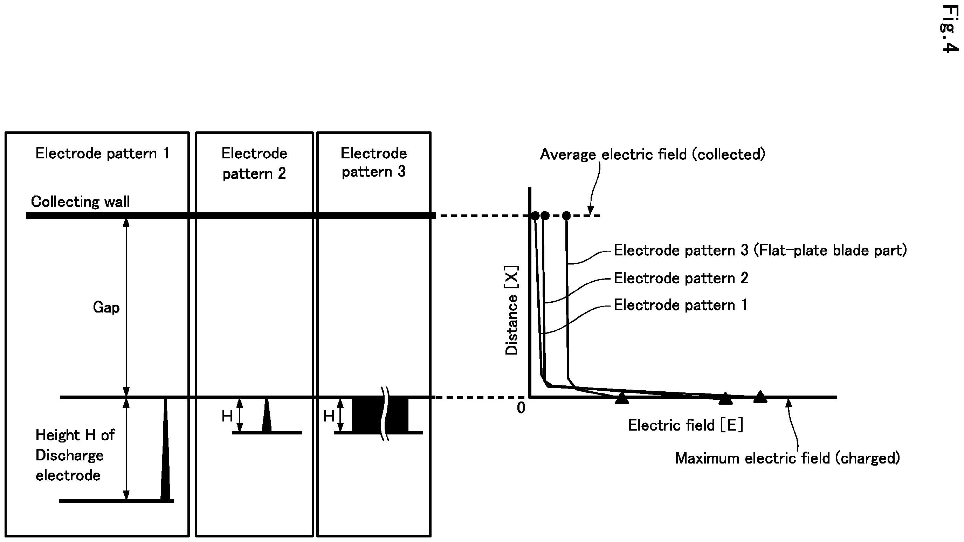

(1) Electrode pattern: a full length of 475 mm and a gap of 51 mm (constant) with a collecting pipe (a).
   (1) Electrode Pattern 1 (Figure 1(a), Figure 1(b)):
      a saw-blade-shaped electrode with discharge plates (b) protruding and each having an approximately isosceles triangle with a height of 87 mm provided over a full length of an electrode rod (c) (twenty per column with 25-mm pitches, twelve columns radially arranged).
   (2) Electrode Pattern 2 (Figure 2(a), Figure 2(b)):
      a saw-blade-shaped electrode with discharge plates (e) protruding and each having an approximately isosceles triangle with a height of 23 mm provided over a full length of an electrode barrel (d) (twenty per column with 25-mm pitches, twelve columns radially arranged).
   (3) Electrode Pattern 3 (Figure 3(a), Figure 3(b)):
      a discharge electrode with: saw-blade-shaped electrodes (with 25-mm pitches and five per column) formed of discharge plates (e) each having an approximately isosceles triangle with a height of 23 mm provided over a length of approximately 125 mm protruding on an upstream side of the electrode barrel (d); and flat-plate-shaped electrodes (twelve per column radially arranged) formed of flat-plate-shaped discharge plates (f) each with the same height (23 mm) provided over a length of 350 mm protruding on a downstream side thereof.
(2) Electric Field Distribution and Tendencies of Electric Field Intensity (Theoretical Analysis):
   (1) Images of electric field distribution and tendencies of electric field intensity (shown in Figure 4)
   (2) Results:
      (a) An average electric field at a collecting wall surface in Electrode Pattern 2 is stronger than that in Electrode Pattern 1.
      (b) In Electrode Pattern 3, the average electric field at the collecting wall surface is further stronger than that in Electrode Pattern 2.
      (C) In Electrode Pattern 3, with the presence of a flat-plate-shaped portion, the discharge current can be restrained. However, corona discharge occurs even at the flat-plate-shaped portion, and a jumping phenomenon occurs with PM recharging, re-exfoliation, reattachment, and recharging again.
      (d) Electric field intensity at the tip of the electrode ... Electrode Pattern 1>Electrode Pattern 2>Electrode Pattern 3
      (e) Average electric field intensity at the collecting wall surface ... Electrode Pattern 3>Electrode Pattern 2>Electrode Pattern 1

### [II] Preliminary Experiment

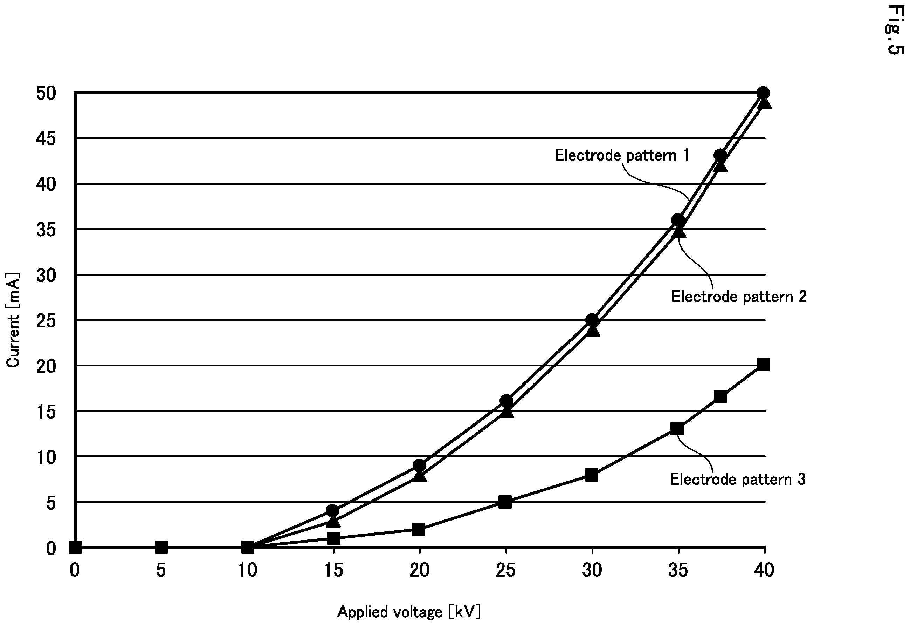

(1) Applied voltage and discharge current (experiment at ordinary temperatures and atmospheric pressure)
   (1) Results of investigation of tendencies of corona-discharge-start and spark-occurrence voltages, discharge voltages, and required current (consumption power) depending on differences in electrode pattern are depicted in Figure 5.
   (2) Results:
      (a) In any electrode pattern, corona discharge starts at an applied voltage near 10 kV.
      (b) In any electrode pattern, a spark occurs at an applied voltage near 40 kV.
      (C) Current/voltage characteristics of Electrode Pattern 1 and Electrode Pattern 2 exhibit approximately similar tendencies.
      (d) The discharge voltage with a high PM collection ratio and a low risk of an occurrence of a spark is on the order of 37 kV.
      (e) In Electrode Pattern 3, a high discharge voltage effective in PM collection can be ensured with a less current compared with Electrode Pattern 1 and Electrode Pattern 2, consumption power is small, and energy saving capability is excellent.

Discharge electrodes of an electrostatic precipitator for treating diesel engine exhaust gas, according to the present invention, have been found based on the results of the above-described preliminary analysis and preliminary experiment, and are summarized as discharge electrodes of a diesel engine exhaust gas treatment apparatus formed of an electrostatic precipitation part in a multistage-type precipitation wall structure in which a plurality of tubular collecting modules are disposed in a main collecting pipe in a pipe axial direction, wherein spacing between the electrodes of each in the tubular collecting modules in an axial direction (spacing in a flow direction of exhaust gas) is arranged to be wide on an upstream side in each of the tubular collecting modules and to be narrow on a downstream side therein, to make a weak-average-electric-field electrode part on the upstream side in each of the tubular collecting modules and a strong-average-electric-field electrode part on the downstream side therein.

Also, discharge electrodes of the electrostatic precipitator for treating diesel engine exhaust gas of the present invention are discharge electrodes of a diesel engine exhaust gas treatment apparatus formed of an electrostatic precipitation part in a multistage-type precipitation wall structure in which a plurality of tubular collecting modules are disposed in a main collecting pipe in a pipe axial direction, wherein spacing between the discharge electrodes in each of the tubular collecting modules (spacing in a flow direction of exhaust gas) is arranged to be wide on an upstream side in each of the tubular collecting modules and flat-plate-shaped discharge electrodes are disposed on a downstream side in each of the tubular collecting modules to make a weak-average-electric-field electrode part on the upstream side in each of the tubular collecting modules and a strong-average-electric-field electrode part on the downstream side therein.

More specifically, discharge electrodes of an electrostatic precipitator for treating diesel engine exhaust gas are discharge electrodes of a diesel engine exhaust gas treatment apparatus including: an electrostatic precipitating means having a tubular collecting part with a predetermined length which configures the discharge electrodes for charging particulate matter contained in exhaust gas from a diesel engine using fuel oil and a precipitation electrode for collecting the particulate matter charged, the discharge electrodes being configured of a main electrode disposed in the tubular collecting part in a pipe axial direction or the discharge electrodes being disposed in an electrode barrel provided on the main electrode to protrude in a radial direction with a large diameter; and tubular collecting modules short in the axial direction and having different diameters being arranged at a plurality of stages in the tubular collecting part formed of a main collecting pipe, which is the discharge electrodes and the precipitation electrode and has a single diameter and a predetermined length, wherein: the discharge electrodes of at least one of the tubular collecting modules arranged at the plurality of stages are any one or combination of discharge electrode needles, low-height saw-blade-shaped discharge plates, and saw-blade-shaped discharge electrode plates having low-height saw-blade-shaped discharge plate parts (mountain parts), or low-height annular discharge electrodes, arranged in the pipe axial direction directly or indirectly with desired spacing on an outer circumferential surface of the main electrode in a circumferential direction with a large diameter in the radial direction; and spacing between the discharge electrodes at outer circumferential ends thereof in the radial direction widely arranged in the pipe axial direction to dispose a weak-average-electric-field electrode part with a weak average electric field intensity between tips of the discharge electrodes and the precipitation electrode on an upstream side of an exhaust gas flow, while the spacing between the discharge electrodes is narrowly arranged to dispose a strong average electric field electrode part with a strong average electric field intensity between the tips of the discharge electrodes and the precipitation electrode on a downstream side in a flow direction of the exhaust gas.

Also, the present invention is directed to discharge electrodes of an electrostatic precipitator for treating diesel engine exhaust gas, being discharge electrodes of a diesel engine exhaust gas treatment apparatus, including: an electrostatic precipitating means having a tubular collecting part with a predetermined length which configures the discharge electrodes for charging particulate matter contained in exhaust gas from a diesel engine using fuel oil and a precipitation electrode for collecting the particulate matter charged, the discharge electrodes being configured of a main electrode disposed in the tubular collecting part in a pipe axial direction or the discharge electrodes being disposed in an electrode barrel provided on the main electrode to protrude in a radial direction with a large diameter; and tubular collecting modules short in the axial direction and having different diameters being arranged at a plurality of stages in the tubular collecting part formed of a main collecting pipe formed of the discharge electrodes and the precipitation electrode and having a single diameter and a predetermined length, wherein: the discharge electrodes of at least one of the tubular collecting modules arranged at the plurality of stages are any one or combination of discharge electrode needles, low-height saw-blade-shaped discharge plates, and saw-blade-shaped discharge electrode plates having low-height saw-blade-shaped discharge plate parts, or low-height annular discharge electrodes, arranged in the pipe axial direction directly or indirectly in a circumferential direction with desired spacing on an outer circumferential surface of the main electrode with a large diameter in the radial direction; spacing between the discharge electrodes at outer circumferential ends thereof in the radial direction is widely arranged in the pipe axial direction to dispose a weak-average-electric-field electrode part with a weak average electric field intensity between tips of the discharge electrodes and the precipitation electrode on an upstream side of an exhaust gas flow; and flat-plate-shaped discharge electrodes arranged in the pipe axial direction directly or indirectly in the circumferential direction on the outer circumferential surface of the main electrode with a large diameter in the radial direction are disposed on a downstream side in a flow direction of the exhaust gas to dispose a strong average electric field electrode part with a strong average electric field intensity between the tips of the discharge electrodes and the precipitation electrode.

Furthermore, according to a preferred aspect, the discharge electrodes of the present invention are configured with at least one set of the weak-average-electric-field electrode part and the strong-average-electric-field electrode part disposed in one tubular collecting module part.

Also, according to another preferred aspect, the strong-average-electric-field electrode part is configured with a plurality of sets of discharge plates disposed on a flat-plate-shaped base part, the discharge plates having recessed and protruding parts formed of short discharge electrode needles or low-height saw blades with dense disposition spacing in the pipe axial direction.

Still further, according to still another preferred aspect, the strong-average-electric-field electrode part is configured with a plurality of sets of discharge plates disposed, each with a cross-sectional shape at a tip of the flat-plate-shaped base part in the radial direction having an I-shaped flat-plate shape, a J-shaped curved part oriented to the circumferential direction, or an L-shaped bent part.

### Advantageous Effects of Invention

According to the discharge electrodes of the electrostatic precipitator for treating diesel engine exhaust gas of the present invention, the following excellent effects are achieved.
(1). On the upstream side of the exhaust gas in the tubular collecting module, the outer circumferential ends of the discharge electrodes in the radial direction are widely spaced in the pipe axial direction at to make a weak-average-electric-field electrode part between tips of the discharge electrodes and the precipitation electrode. With this, the maximum electric field at the tips of the discharge electrodes is strong, corona discharge favorably occurs, and corona electrons are attached to the PM surfaces, thereby causing the charged PM to acquire a large Coulomb force to get a large attachment force to the collecting surface and to be reliably moved to the collecting surface of the precipitation electrode to allow attachment and deposition. With the corona electrons leaking to the collecting surface, the PM moved to be attached and deposited on the collecting surface loses the attachment force (Coulomb force) to the collecting surface and is exfoliated and flown by the exhaust gas to the downstream side. Also, on the downstream side of the exhaust gas in the tubular collecting module, the electrodes are arranged densely with a desired narrow spacing or without spacing in the pipe axial direction to make a strong-average-electric-field electrode part between tips of the discharge electrodes and the precipitation electrode. With this, a sufficient Coulomb force is acquired for PM not too far from the collecting surface or PM with its surface area increased due to deposition even with corona discharge weaker than that of the weak-average-electric-field electrode part on the upstream side and small charge due to attachment of small corona electrons onto PM surfaces, a reattachment force onto the collecting surface is acquired to cause PM to be reliably moved to the collecting surface of the precipitation electrode for reattachment and deposition. Thereafter, it exhibits a jumping phenomenon in which these re-exfoliation, reattachment, and redeposition are repeated to encourage an increase in PM concentration of the exhaust gas flow near the collecting wall surface and ensure diversion of PM from the PM-high-concentration discharging part to reliably collect the diameter-increased PM at the collecting part of a cyclone or collision-type inertial-particle separation type. After that, the PM is removed and PM collection as a diesel engine exhaust gas treatment apparatus can be ensured. Also, the applied voltage is ensured while the average electric field intensity at the collecting wall is kept, and the discharge current is decreased, thereby enabling to reduce the consumption power can be reduced.
(2). When a plurality of sets of discharge electrodes in one tubular collecting module are disposed in the electrode axial direction (flow direction of the exhaust gas) with the weak-average-electric-field electrode part on the upstream side and the strong-average-electric-field electrode part on the downstream side as one combination, even if PM passing through the combination part of the weak-average-electric-field electrode part and the strong-average-electric-field electrode part of the first set is exfoliated from the collecting surface due to swirling of the exhaust gas or the like and then goes far away, the PM is charged by reliably receiving corona discharge by the weak-average-electric-field electrode part on the upstream side and the strong-average-electric-field electrode part on the downstream side from the second set to acquire a large Coulomb force to allow repetition of collection and deposition on the collecting surface. Then, as undergoing jumping, PM is concentrated and can be reliably collected. Also, the applied voltage is ensured while the average electric field intensity at the collecting wall is kept, and the discharge current is decreased, thereby enabling to reduce the consumption power.
(3). When a low-height annular discharge electrode is disposed on the discharge electrode on the uppermost stream in the exhaust gas flow direction of the weak-average-electric-field electrode part, an electric field between the tip of this annular discharge electrode and the collecting wall surface is increased, and the amount of discharge of corona electrodes occurring from the tip of the discharge electrode is increased. Furthermore, with the discharge electrode contiguous in the circumferential direction, dead spots in the circumferential direction are decreased to increase a Coulomb force to PM, allowing reliable attachment, collection, and deposition on the collecting wall surface. Eventually, PM can be reliably collected. Also, the discharge current is decreased, thereby enabling to reduce consumption power.
(4). In the strong-average-electric-field electrode part, short-length, short-diameter discharge electrode needles or low-height saw-blade-shaped discharge electrode needles are integrally or separately formed on a flat-plate-shaped base part singly or in combination with recessed and protruding parts with high density of disposition spacing in the pipe axial direction. This allows easy conformance to changes of engine's various driving conditions, and also allows the PM exfoliated from the collecting surface to be reliably charged to acquire a Coulomb force to allow repetition of collection and deposition on the collecting surface. Then, as undergoing jumping, PM is concentrated and can be reliably collected. Also, the discharge current is decreased, thereby enabling to reduce the consumption power.
(5). If the strong-average-electric-field electrode part is configured so that the cross-sectional shape at the tip of the flat-plate-shaped base part in the radial direction is formed to be flattened in an I shape, the discharge electrode can be easily manufactured. Also, while PM is reliably collected, flow resistance of the exhaust gas is decreased to decrease energy losses, thereby decreasing the amount of fuel consumption and improving fuel efficiency. Furthermore, when the cross-sectional shape at the tip of the flat-plate-shaped base part of the strong-average-electric-field electrode part in the radial direction is formed as a J-shaped curved part oriented to the circumferential direction or an L-shaped bent part, deformation stiffness against mechanical vibrations and thermal stress to the strong-average-electric-field electrode is increased, and durability of the electrostatic precipitator for treating diesel engine exhaust gas is effectively ensured.

### Brief Description of Drawings

Figure 1 depicts image diagrams of an electrode pattern 1 used in a preliminary analysis performed by the inventor and others, in which Figure (a) is a side view and Figure (b) is an end view.
Figure 2 depicts image diagrams of an electrode pattern 2 used also in the preliminary analysis, in which Figure (a) is a side view and Figure (b) is an end view.
Figure 3 depicts image diagrams of an electrode pattern 3 used also in the preliminary analysis, in which Figure (a) is a side view and Figure (b) is an end view.
Figure 4 is an image diagram depicting an electric field distribution and tendencies of electric field intensity acquired also in the preliminary analysis.
Figure 5 is a graph depicting a relation between an applied voltage and a discharge current acquired in the preliminary experiment performed by the inventor and others.
Figure 6 is a schematic longitudinal sectional view of the main parts, depicting a first embodiment of discharge electrodes of an electrostatic precipitator for treating diesel engine exhaust gas according to the present invention.
Figure 7 is a schematic longitudinal sectional view of the main parts, depicting a second embodiment of discharge electrodes of the electrostatic precipitator for treating diesel engine exhaust gas according to the present invention.
Figure 8 is a schematic longitudinal sectional view of the main parts depicting a third embodiment of discharge electrodes of the electrostatic precipitator for treating diesel engine exhaust gas according to the present invention.
Figure 9 is a schematic longitudinal sectional view of the main parts depicting a fourth embodiment of discharge electrodes of the electrostatic precipitator for treating diesel engine exhaust gas according to the present invention.
Figure 10 depicts schematic views of cross-sectional shapes of a strong-average-electric-field electrode part in the discharge electrodes of the fourth embodiment depicted in Figure 9, in which Figure (a) depicts an I-shaped cross-sectional shape, Figure (b) depicts an L-shaped cross-sectional shape, and Figure (c) depicts a J-shaped cross-sectional shape.
Figure 11 is a schematic view depicting dimensions of each part of the electrostatic precipitator for treating diesel engine exhaust gas used in Example 1 of the present invention.
Figure 12 is a schematic view depicting dimensions of each part of an electrostatic precipitator for treating diesel engine exhaust gas used in Conventional Example 1 of the Example.
Figure 13 is a schematic view depicting dimensions of each part of an electrostatic precipitator for treating diesel engine exhaust gas used in Conventional Example 2 of the Example.
Figure 14 is a schematic longitudinal sectional view depicting one example of an entire structure of a conventional electrostatic precipitator for treating diesel engine exhaust gas.
Figure 15A is a schematic view depicting one example of each electrode pattern installed in each collecting module of the electrostatic precipitator for treating diesel engine exhaust gas depicted in Figure 14.
Figure 15B is a schematic view depicting another example of each electrode pattern also installed in each collecting module of the electrostatic precipitator for treating diesel engine exhaust gas depicted in Figure 14.

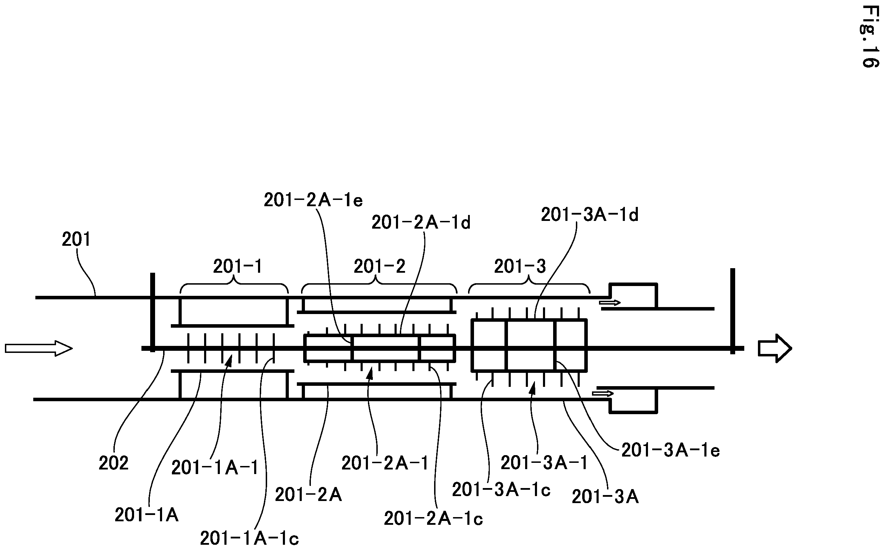

Figure 16 is a schematic longitudinal sectional view depicting another example of the entire structure of the conventional electrostatic precipitator for treating diesel engine exhaust gas.

### Description of Embodiments

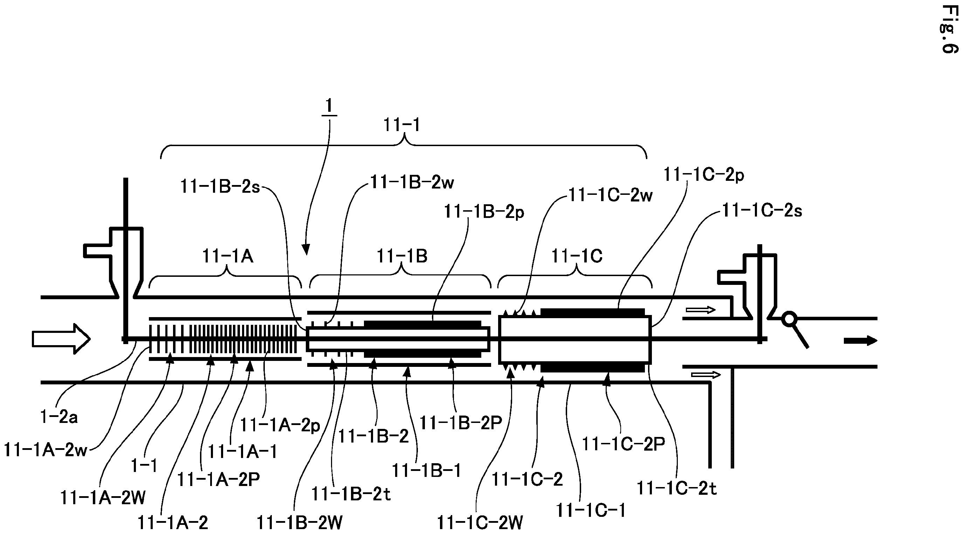

An electrostatic precipitator for treating diesel engine exhaust gas of a first embodiment depicted in Figure 6 is applied to a scheme in which tubular collecting modules are made as a multistage type to condense PM and a cyclone (not depicted) is used to collect PM. Here, exemplarily depicted is discharge electrodes applied to a diesel engine exhaust gas treatment apparatus of a three-stage type with tubular collecting modules being a small-diameter collecting part 11-1A, an intermediate-diameter collecting part 11-1B, and a large-diameter collecting part 11-1C, from an upstream side of a tubular collecting part 11-1. An electrostatic precipitation part 1 is formed of collecting modules at three stages formed of a main collecting pipe 1-1 configuring a precipitation electrode of the tubular collecting part 11-1 and having a single diameter and a predetermined length, a small-diameter collecting pipe 11-1A-1, and an intermediate collecting pipe 11-1B-1, and discharge electrodes 11-1A-2, 11-1B-2, and 11-1C-2 for charging PM contained in exhaust gas. The discharge electrodes include weak-average-electric-field electrode parts (collecting electrodes) 11-1A-2W, 11-1B-2W, and 11-1C-2W on an upstream side of exhaust gas and strong-average-electric-field electrode parts (collecting electrodes) 11-1A-2P, 11-1B-2P, and 11-1C-2P on a downstream side thereof, respectively.

That is, in a small-diameter tubular collecting module at the first stage on the uppermost stream side, the small-diameter collecting pipe 11-1A-1 as a precipitation electrode is fixed to the main collecting pipe 1-1 with a stay (not depicted) in a conductive state. Inside, to retain a discharge spacing with respect to the small-diameter collecting pipe 11-1A-1, on an outer surface of an electrode rod (main electrode) 1-2a, a plurality of short-needle-shaped electrode needles 11-1A-2w are radially disposed as a weak-average-electric-field electrode part 11-1A-2W with a desired wide spacing in an axial direction on the upstream side of the exhaust gas flow. On the upstream side of the exhaust gas flow, while a maximum electric field at the tip of each discharge electrode is strong and corona discharge favorably occurs, the electric field at the tip of the discharge electrode is strong but an average electric field intensity from the tip of the discharge electrode to the precipitation electrode is weak. On the downstream side of the exhaust gas, a plurality of short-needle-shaped electrode needles 11-1A-2p are densely disposed radially in a circumferential direction as a strong-average-electric-field electrode part 11-1A-2P with a desired narrow spacing in the axial direction. While the maximum electric field at each electrode tip is lower and the electric field is weaker than those of the weak-average-electric-field electrode part 11-1A-2W, a sufficient Coulomb force is acquired for PM not too far from a collecting surface or PM with its surface area increased due to deposition even with corona discharge weaker than that of the weak-average-electric-field electrode part and small charge due to attachment of small corona electrons onto PM surfaces. A reattachment force onto the collecting surface is acquired to cause PM to be reliably moved to the collecting surface of the precipitation electrode for reattachment and deposition. Thereafter, it exhibits a jumping phenomenon in which these re-exfoliation, reattachment, and redeposition are repeated, and also in which the electric field at the tip of the discharge electrode is weak but the average electric field intensity from the tip of the discharge electrode to the precipitation electrode is strong. The weak-average-electric-field electrode part 11-1A-2W and the strong-average-electric-field electrode part 11-1A-2P are taken as the small-diameter collecting part 11-1A.

Next, in an intermediate-diameter tubular collecting module at the second stage, the intermediate-diameter collecting pipe 11-1B-1 as a precipitation electrode is similarly fixed to the main collecting pipe 1-1 with a stay (not depicted). Thereinside, to retain a discharge spacing with respect to the intermediate-diameter collecting pipe 11-1B-1, on the outer surface of the electrode rod 1-2a, on an electrode barrel 11-1B-2t fixed with a stay 11-1B-2s in a conductive state, a plurality of short-needle-shaped electrode needles 11-1B-2w are radially disposed as a weak-average-electric-field electrode part 11-1B-2W with a desired wide spacing in the axial direction on the upstream side of the exhaust gas flow. On this upstream side, while a maximum electric field at the tip of each discharge electrode is strong and corona discharge favorably occurs, the electric field at the tip of the discharge electrode is strong but an average electric field intensity from the tip of the discharge electrode to the precipitation electrode is weak. On the electrode barrel 11-1B-2t on the downstream side of the exhaust gas, a plurality of flat plates 11-1B-2p are radially disposed in the axial direction and the circumferential direction as a strong-average-electric-field electrode part 11-1B-2P. On this downstream side, the electric field at the tip of the discharge electrode is weak but an average electric field intensity from the tip of the discharge electrode to the precipitation electrode is strong. The weak-average-electric-field electrode part 11-1B-2W and the strong-average-electric-field electrode part 11-1B-2P are taken as the intermediate-diameter collecting part 11-1B.

Furthermore, in a maximum-diameter tubular collecting module at the third stage on the lowermost stream side, inside a large-diameter collecting pipe 11-1C-1 common to the main collecting pipe 1-1 as a precipitation electrode, to retain a discharge spacing with respect to the large-diameter collecting pipe 11-1C-1, on an electrode barrel 11-1C-2t fixed to the outer surface of the electrode rod 1-2a with a stay 11-1C-2s in a conductive state, a plurality of low-height electrode needles 11-1C-2w as saw-blade-shaped electrode needles each having an approximately isosceles triangle are radially disposed in the circumferential direction as a weak-average-electric-field electrode part 11-1C-2W with a desired wide spacing in the axial direction on the upstream side of the exhaust gas flow. On this upstream side, while a maximum electric field at the tip of each discharge electrode is strong and corona discharge favorably occurs, the electric field at the tip of the discharge electrode is strong but an average electric field intensity from the tip of the discharge electrode to the precipitation electrode is weak. On the electrode barrel 11-1C-2t on the downstream side of the exhaust gas, a plurality of flat plates 11-1C-2p are radially disposed in the axial direction and the circumferential direction as a strong-average-electric-field electrode part 11-1C-2P, in which the electric field at the tip of the discharge electrode is weak but an average electric field intensity from the tip of the discharge electrode to the precipitation electrode is strong. The weak-average-electric-field electrode part 11-1C-2W and the strong-average-electric-field electrode part 11-1C-2P are taken as the large-diameter collecting part 11-1C. This structure allows PM to be reliably collected, allows the applied voltage to be ensured while keeping the average electric field intensity at the collecting wall, and also allows a decrease in discharge current to reduce consumption power.

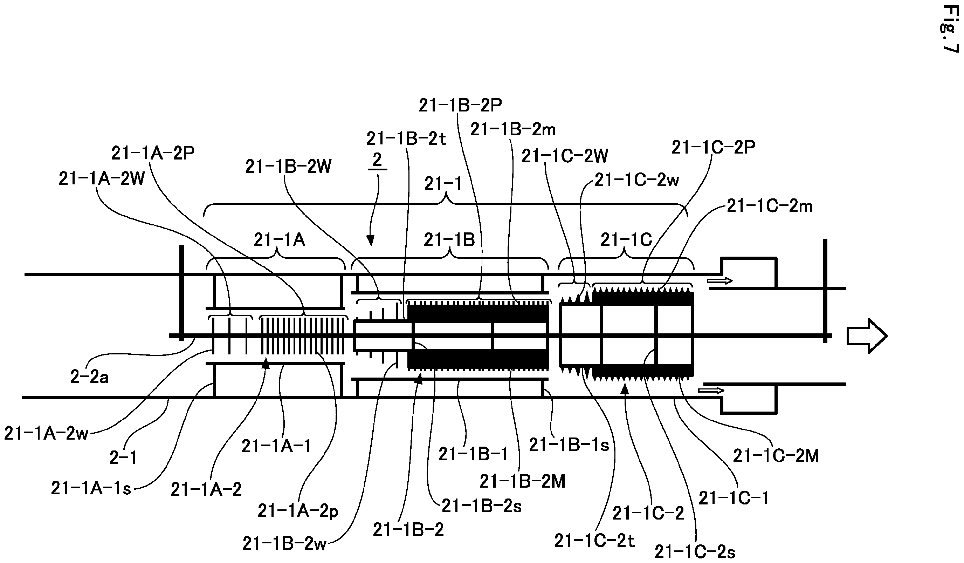

In an electrostatic precipitator for treating diesel engine exhaust gas of a second embodiment depicted in Figure 7, in a scheme similar to that of the electrostatic precipitator for treating diesel engine exhaust gas of the first embodiment depicted in Figure 6 in which tubular collecting modules are made as a multistage type to condense PM and a cyclone (not depicted) is used to collect PM, exemplarily depicted is discharge electrodes applied to a diesel engine exhaust gas treatment apparatus of a three-stage type with tubular collecting modules. The modules include a small-diameter collecting part 21-1A, an intermediate-diameter collecting part 21-1B, and a large-diameter collecting part 21-1C, from an upstream side of a tubular collecting part 21-1. An electrostatic precipitation part 2 is formed of collecting modules at three stages formed of a main collecting pipe 2-1 configuring a precipitation electrode of the tubular collecting part 21-1 and having a single diameter and a predetermined length, a small-diameter collecting pipe 21-1A-1, and an intermediate collecting pipe 21-1B-1, and discharge electrodes 21-1A-2, 21-1B-2, and 21-1C-2, for charging PM contained in exhaust gas. The discharge electrodes include weak-average-electric-field electrode parts (collecting electrodes) 21-1A-2W, 21-1B-2W, and 21-1C-2W, on an upstream side of exhaust gas and strong-average-electric-field electrode parts (collecting electrodes) 21-1A-2P, 21-1B-2P, and 21-1C-2P on a downstream side thereof, respectively.

That is, in a small-diameter tubular collecting module at the first stage on the uppermost stream side of the electrostatic precipitator for treating diesel engine exhaust gas of the second embodiment depicted in Figure 7, the small-diameter collecting pipe 21-1A-1 as a precipitation electrode is fixed to the main collecting pipe 2-1 with a stay 21-1A-1s in a conductive state. Thereinside, to retain a discharge spacing with respect to the small-diameter collecting pipe 21-1A-1, on an outer surface of an electrode rod (main electrode) 2-2a, a plurality of short-needle-shaped electrode needles 21-1A-2w are radially disposed in a circumferential direction as a weak-average-electric-field electrode part 21-1A-2W with a desired wide spacing in an axial direction on the upstream side of the exhaust gas flow. On this upstream side, while a maximum electric field at the tip of each discharge electrode is strong and corona discharge favorably occurs, the electric field at the tip of the discharge electrode is strong but an average electric field intensity from the tip of the discharge electrode to the precipitation electrode is weak. On the downstream side of the exhaust gas, a plurality of needle-shaped electrode needles 21-1A-2p are densely disposed radially as a strong-average-electric-field electrode part 21-1A-2P with a desired narrow spacing in the axial direction. While the maximum electric field at each electrode tip is lower and the electric field is weaker than those of the weak-average-electric-field electrode part 21-1A-2W, a sufficient Coulomb force is acquired for PM not too far from a collecting surface or PM with its surface area increased due to deposition even with corona discharge weaker than that of the weak-average-electric-field electrode part and small charge due to attachment of small corona electrons onto PM surfaces, and a reattachment force onto the collecting surface is acquired to cause PM to be reliably moved to the collecting surface of the precipitation electrode for reattachment and deposition. Thereafter, it exhibits a jumping phenomenon in which these re-exfoliation, reattachment, and redeposition are repeated, and also in which the electric field at the tip of the discharge electrode is weak but the average electric field intensity from the tip of the discharge electrode to the precipitation electrode is strong. The weak-average-electric-field electrode part 21-1A-2W and the strong-average-electric-field electrode part 21-1A-2P are taken as the small-diameter collecting part 21-1A.

Next, in an intermediate-diameter tubular collecting module at the second stage, the intermediate-diameter collecting pipe 21-1B-1 as a precipitation electrode is similarly fixed to the main collecting pipe 2-1 with a stay 21-1B-1s in a conductive state. Thereinside, to retain a discharge spacing with respect to the intermediate-diameter collecting pipe 21-1B-1, on the outer surface of the electrode rod 2-2a, on an electrode barrel 21-1B-2t fixed with a stay 21-1B-2s in a conductive state, a plurality of needle-shaped electrode needles 21-1B-2w with different heights are radially disposed as a weak-average-electric-field electrode part 21-1B-2W with a desired wide spacing in the axial direction on the upstream side of the exhaust gas flow. While a maximum electric field at the tip of each discharge electrode is strong and corona discharge favorably occurs, the electric field at the tip of the discharge electrode is strong but an average electric field intensity from the tip of the discharge electrode to the precipitation electrode is weak. On the electrode barrel 21-1B-2t on the downstream side of the exhaust gas, a plurality of flat plates 21-1B-2M with a plurality of short-needle-shaped electrode needles 21-1B-2m densely provided in the axial direction at the tip in the radial direction are radially disposed in the axial direction and the circumferential direction as a strong-average-electric-field electrode part 21-1B-2P. The electric field at the tip of the discharge electrode is weak but an average electric field intensity from the tip of the discharge electrode to the precipitation electrode is strong. The weak-average-electric-field electrode part 21-1B-2W and the strong-average-electric-field electrode part 21-1B-2P are taken as the intermediate-diameter collecting part 21-1B.

Furthermore, in a maximum-diameter tubular collecting module at the third stage on the lowermost stream side, inside a large-diameter collecting pipe 21-1C-1 common to the main collecting pipe 2-1 as a precipitation electrode, to retain a discharge spacing with respect to the large-diameter collecting pipe 21-1C-1, on an electrode barrel 21-1C-2t fixed to the outer surface of the electrode rod 2-2a with a stay 21-1C-2s in a conductive state, a plurality of electrode needles 21-1C-2w as low-height saw-blade-shaped electrode needles each having a substantially isosceles triangle with a different height are radially disposed in the axial direction so that the height is sequentially increased and are taken as a weak-average-electric-field electrode part 21-1C-2W with a desired wide spacing in the axial direction on the upstream side of the exhaust gas flow. While a maximum electric field at the tip of each discharge electrode is strong and corona discharge favorably occurs, the electric field at the discharge electrode is strong but an average electric field intensity from the tip of the discharge electrode to the precipitation electrode is weak. On the electrode barrel 21-1C-2t on the downstream side of the exhaust gas, a plurality of flat plates 21-1C-2M with a plurality of short-needle-shaped electrode needles 21-1C-2m densely provided in the axial direction at the tip in the radial direction are radially disposed in the axial direction and the circumferential direction as a strong-average-electric-field electrode part 21-1C-2P. The electric field at the tip of the discharge electrode is weak but an average electric field intensity from the tip of the discharge electrode to the precipitation electrode is strong. The weak-average-electric-field electrode part 21-1C-2W and the strong-average-electric-field electrode part 21-1C-2P are taken as the large-diameter collecting part 21-1C. Also, in this second embodiment, this structure allows PM to be reliably collected, allows the applied voltage to be ensured while keeping the average electric field intensity at the collecting wall, and also allows a decrease in the discharge current, thus enabling to reduce the consumption power.

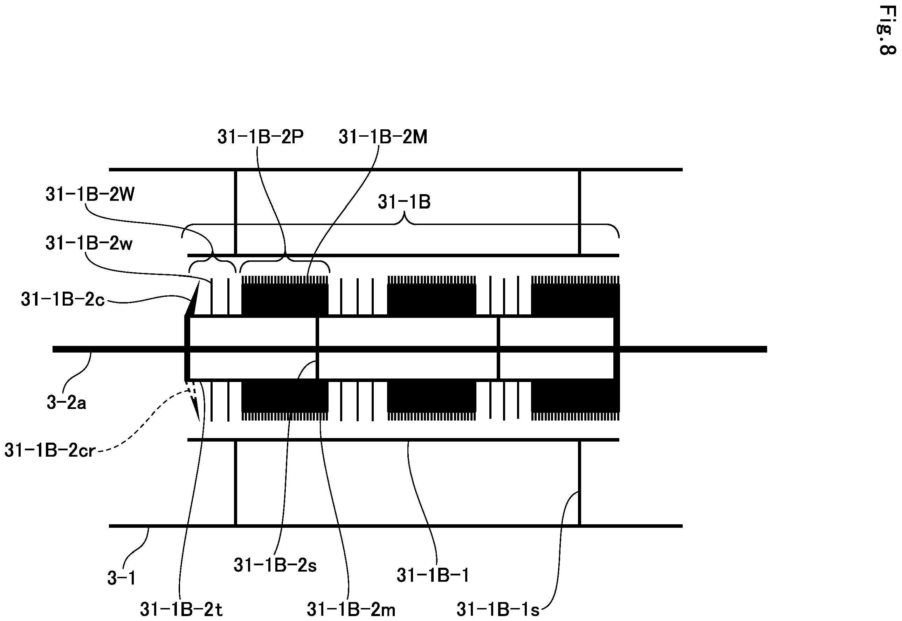

In an electrostatic precipitator for treating diesel engine exhaust gas of a third embodiment depicted in Figure 8, in a scheme similar to those of the electrostatic precipitators for treating diesel engine exhaust gas depicted in Figure 6 and Figure 7 in which tubular collecting modules are made as a multistage type to condense PM and a cyclone (not depicted) is used to collect PM, exemplarily depicted is discharge electrodes applied to a diesel engine exhaust gas treatment apparatus of a three-stage type with tubular collecting modules. The modules include a small-diameter collecting part, an intermediate-diameter collecting part, and a large-diameter collecting part, from an upstream side of the tubular collecting parts. Here, only the intermediate-diameter collecting module part is used to describe the structure of the discharge electrodes.

That is, in an intermediate-diameter collecting part 31-1B at the second stage of the electrostatic precipitator for treating diesel engine exhaust gas of the third embodiment depicted in Figure 8, an intermediate-diameter collecting pipe 31-1B-1 as a precipitation electrode is fixed to a main collecting pipe 3-1 with a stay 31-1B-1s. Thereinside, to retain a discharge spacing with respect to the intermediate-diameter collecting pipe 31-1B-1, on an electrode barrel 31-1B-2t fixed to the outer surface of an electrode rod 3-2a with a stay 31-1B-2s in a conductive state, an annular cone edge ring 31-1B-2c disposed at the tip part of the electrode barrel is disposed on the upstream side of the exhaust gas flow, and a weak-average-electric-field electrode part 31-1B-2W is disposed to have a plurality of needle-shaped electrode needles 31-1B-2w radially disposed with a desired wide spacing in the axial direction. While a maximum electric field at the tip of each discharge electrode is strong and corona discharge favorably occurs, the electric field at the tip of the discharge electrode is strong but an average electric field intensity from the tip of the discharge electrode to the precipitation electrode is weak. On a downstream side of the weak-average-electric-field electrode part, a strong-average-electric field electrode part 31-1B-2P is disposed. In the electrode part 31-1B-2P, flat plates 31-1B-2M with a plurality short-needle-shaped electrode needles 31-1B-2m densely provided in the axial direction at the tip in the radial direction are radially disposed in the axial direction and the circumferential direction, in which the electric field at the tip of the discharge electrode is weak but an average electric field intensity from the tip of the discharge electrode to the precipitation electrode is strong. The disposition of the combination of the annular cone edge ring 31-1B-2c, the weak-average-electric-field electrode part 31-1B-2W, and the strong-average-electric field electrode part 31-1B-2P consecutively at three stages forms a structure that three sets of the weak-average-electric-field electrode parts 31-1B-2W and three sets of the strong-average-electric-field electrode parts 31-1B-2P are alternately arranged. In the weak-average-electric-field electrode part 31-1B-2W, a plurality of short-needle-shaped electrode needles or the like are radially disposed in the circumferential direction with a desired wide spacing in the axial direction, in which a maximum electric field at the tip of each discharge electrode is strong and corona discharge favorably occurs. In the strong-average-electric-field electrode part 31-1B-2P, a plurality of short-needle-shaped electrode needles or the like are radially disposed so as to be densely provided with a desired narrow spacing in the axial direction, in which while the maximum electric field at each electrode tip is lower and the electric field is weaker than those of the weak-average-electric-field electrode part, a sufficient Coulomb force is acquired for PM not too far from a collecting surface or PM with its surface area increased due to deposition even with small charge due to attachment of small corona electrons onto PM surfaces by corona discharge weaker than that of the weak-average-electric-field electrode part, a reattachment force onto the collecting surface is acquired to cause PM to be reliably moved to the collecting surface for reattachment and deposition. Thereafter, it exhibits a jumping phenomenon in which these re-exfoliation, reattachment, and redeposition are repeated.

Here, the set of the weak-average-electric-field electrode part 31-1B-2W and the strong-average-electric-field electrode part 31-1B-2P at the first stage on the upstream side of the exhaust gas flow is configured of the annular cone edge ring 31-1B-2c at a terminal part of the electrode barrel 31-1B-2t on the uppermost stream side of the exhaust gas and preferably having a leak hole 31-1B-2cr, the weak-average-electric-field electrode part 31-1B-2W with the plurality of electrode needles 31-1B-2w provided on the subsequent stream side with a wide spacing in the axial direction retained, and the strong-average-electric-field electrode part 31-1B-2P in which the plurality of low-height flat plates 31-1B-2M with many extremely-short electrode needles 31-1b-2m or extremely-low-height saw-blade-shaped electrodes (not depicted) densely provided separately or integrally by welding, brazing, or the like over a substantially full length with a narrow spacing in the axial direction are radially disposed in the axial direction on the outer circumferential surface of the electrode barrel 31-1B-2t. Also, the sets of the weak-average-electric-field electrode part 31-1B-2W and the strong-average-electric-field electrode part 31-1B-2P at the second stage and the third stage are each formed of the weak-average-electric-field electrode part 31-1B-2W formed of the plurality of sets of electrode needles 31-1B-2w each provided on the upstream side of the exhaust gas flow with a wide spacing in the axial direction retained and the strong-average-electric-field electrode part 31-1B-2P similar to the above in which the plurality of low-height flat plates 31-1B-2M with many extremely-short electrode needles or saw-blade-shaped electrodes densely provided by welding, brazing, or the like over a substantially full length with a narrow spacing in the axial direction and having a desired length are radially arranged in the axial direction.

With the structure by the combination of three stages in this manner, repetition of reliable attachment to the collecting wall surface by a large Coulomb force by corona discharge in a strong electric field at the time of passage to the weak-average-electric-field electrode part 31-1B-2W and exfoliation and deposition with small charge due to attachment of small corona electrons onto PM surfaces by corona discharge in a weak electric field at the time of passage to the strong-average-electric-field electrode part 31-1B-2P is repeated at least three times on PM passing through this intermediate-diameter collecting module part. While a discharge current is decreased to allow a reduction in consumption power, PM can be eventually reliably collected.

The disposing positions of the weak-average-electric-field electrode part 31-1B-2W and the strong-average-electric-field electrode part 31-1B-2P in the circumferential direction are not particularly limited, and they may be provided in the same phase in the circumferential direction and consecutively in the axial direction or may be arranged in a phase-shifted zigzag manner. Also, as for the disposing positions of electrodes configuring each stage in the circumferential direction, they may be provided in the same phase in the circumferential direction and consecutively in the axial direction or may be arranged in a phase-shifted zigzag manner.

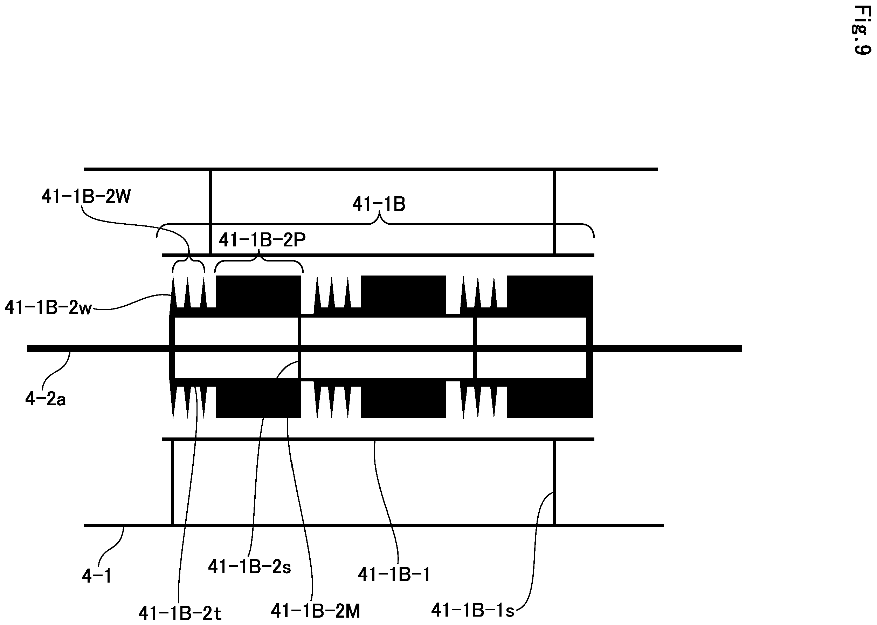

In an electrostatic precipitator for treating diesel engine exhaust gas of a fourth embodiment depicted in Figure 9, in a scheme similar to that of the electrostatic precipitator for treating diesel engine exhaust gas depicted in Figure 8 in which tubular collecting modules are made as a multistage type to condense PM and a cyclone (not depicted) is used to collect PM, exemplarily depicted is discharge electrodes applied to a diesel engine exhaust gas treatment apparatus of a three-stage type with tubular collecting modules. The modules include a small-diameter collecting part, an intermediate-diameter collecting part, and a large-diameter collecting part, from an upstream side of the tubular collecting parts. Also, in the present embodiment, only the intermediate-diameter collecting module part similar to the tubular collecting module of the third embodiment depicted in Figure 8 is used to describe the structure of the discharge electrodes.

That is, in an intermediate-diameter collecting part 41-1B at the second stage of the electrostatic precipitator for treating exhaust gas of the diesel engine of the fourth embodiment depicted in Figure 9, an intermediate-diameter collecting pipe 41-1B-1 as a precipitation electrode is fixed to a main collecting pipe 4-1 with a stay 41-1B-1s in a conductive state. Thereinside, to retain a discharge spacing with respect to the intermediate-diameter collecting pipe 41-1B-1, on an electrode barrel 41-1B-2t fixed to the outer surface of an electrode rod 4-2a with a stay 41-1B-2s in a conductive state, a combination of a weak-average-electric-field electrode part 41-1B-2W on the upstream side of the exhaust gas flow with a desired wide spacing in the axial direction and a flat strong-average-electric-field electrode part 41-1B-2P on the downstream side of the weak-average-electric-field electrode part without a spacing is disposed consecutively at three stages in the axial direction. With this, three sets of the weak-average-electric-field electrode parts 41-1B-2W and three sets of the strong-average-electric-field electrode parts 41-1B-2P are alternately arranged. In the weak-average-electric-field electrode part 41-1B-2W, a plurality of short-saw-blade-shaped electrode needles or the like are radially disposed with a desired wide spacing in the axial direction, in which a maximum electric field at the tip of each discharge electrode is strong and corona discharge favorably occurs. In the strong-average-electric-field electrode part 41-1B-2P, low-height flat-plate-shaped electrodes 41-1B-2M are radially disposed. While the maximum electric field at the tip of each flat electrode without a spacing in the axial direction is lower and the electric field is weaker than those of the weak-average-electric-field electrode part 41-1B-2W, a sufficient Coulomb force is acquired for PM not too far from a collecting surface or PM with its surface area increased due to deposition even with small charge due to attachment of small corona electrons onto PM surfaces by corona discharge weaker than that of the weak-average-electric-field electrode part, a reattachment force onto the collecting surface is acquired to cause PM to be reliably moved to the collecting surface for reattachment and deposition. Thereafter, it exhibits a jumping phenomenon in which these exfoliation, attachment, and deposition are repeated.

Here, the set of the weak-average-electric-field electrode part 41-1B-2W and the strong-average-electric-field electrode part 41-1B-2P at the first stage is formed of the weak-average-electric-field electrode part 41-1B-2W with three saw-blade-shaped electrodes 41-1B-2w each in a substantially isosceles triangular shape provided on the upstream side of the exhaust gas with a wide spacing in the axial direction retained and the strong-average-electric-field electrode part 41-1B-2P with a low-height flat-plate-shaped electrode 41-1B-2M provided in the axial direction without unevenness in the radial direction. The sets of the weak-average-electric-field electrode part 41-1B-2W and the strong-average-electric-field electrode part 41-1B-2P, at the second stage and the third stage, have the combination identical to that at the first stage.

In the weak-average-electric-field electrode part 41-1B-2W and the strong-average-electric-field electrode part 41-1B-2P, the saw-blade-shaped electrodes 41-1B-2w each in a substantially isosceles triangular shape are made from one plate material by laser cutting or the like on the upstream side of the exhaust gas with a wide spacing in the axial direction retained to form the weak-average-electric-field electrode part 41-1B-2W and the strong-average-electric-field electrode part 41-1B-2P formed of a low-height flat-plate-shaped part with the same height without unevenness is integrally formed on the downstream side. This structure allows PM to be reliably collected, allows the applied voltage to be ensured while keeping the average electric field intensity at the collecting wall, and also allows a decrease in discharge current, thus enabling to reduce consumption power.

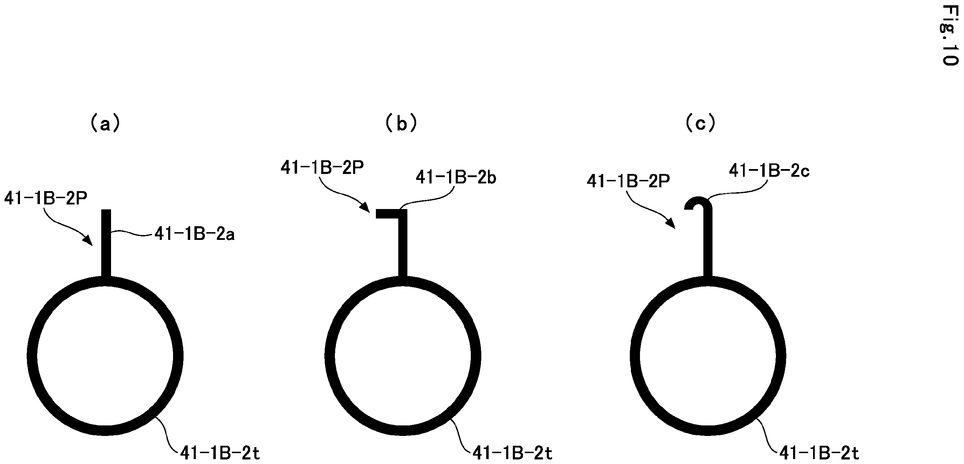

Also, if the strong-average-electric-field electrode part 41-1B-2P is formed to have a cross-sectional shape at the tip of a flat-plate-shaped base part in the radial direction as an I-shaped plate electrode 41-1B-2a as depicted in Figure 10(a), the discharge electrode can be easily manufactured. In addition, since flow resistance of the exhaust gas is small with a small energy loss while PM is reliably collected, the amount of fuel consumption is decreased, and the fuel efficiency can be improved. Furthermore, by forming the strong-average-electric-field electrode part 41-1B-2P in its cross-sectional shape at the tip of the flat-plate-shaped base part in the radial direction as a shape having an L-shaped bent part 41-1B-2b as depicted in Figure 10(b) or a J-shaped curved part 41-1B-2c oriented to the circumferential direction as depicted in Figure 10(c), deformation stiffness is increased. In addition, deformation resistance of the strong-average-electric-field electrode part 41-1B-2P against vibrations due to hull swings by the engine or undulation is increased, and durability of the electrostatic precipitator for treating diesel engine exhaust gas is effectively ensured.

With the structure by the combination of three stages in this manner, repetition of reliable attachment to the collecting wall surface by a large Coulomb force by corona discharge in a strong electric field at the time of passage through the weak-average-electric-field electrode part 41-1B-2W and exfoliation and deposition with small charge due to attachment of small corona electrons onto PM surfaces by corona discharge in a weak electric field at the time of passage to the strong-average-electric-field electrode part 41-1B-2P is repeated at least three times on PM passing through the intermediate-diameter collecting module part. Eventually, PM can be reliably collected.

Also in the present embodiment, the disposing positions of the weak-average-electric-field electrode part 41-1B-2W and the strong-average-electric-field electrode part 41-1B-2P in the circumferential direction are not particularly limited, and they may be provided in the same phase in the circumferential direction and consecutively in the axial direction or may be arranged in a phase-shifted zigzag manner. Also, as for the disposing positions of electrodes configuring each stage in the circumferential direction, they may be provided in the same phase in the circumferential direction and consecutively in the axial direction or may be arranged in a phase-shifted zigzag manner.

### [Example 1]

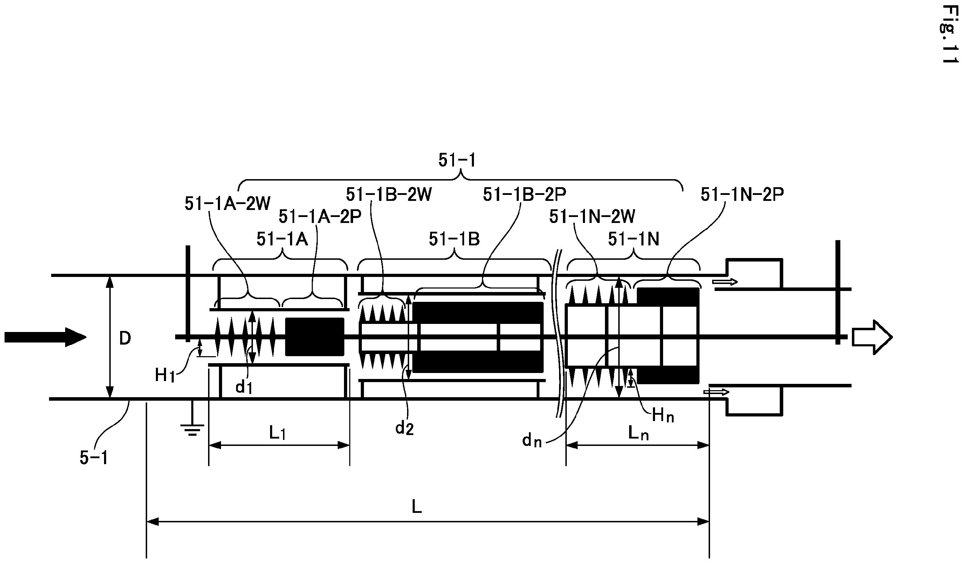

To check the exhaust gas treatment effects of a marine diesel engine, an investigation has been made on consumption power of a use high-pressure power supply device equipped with the electrostatic precipitator for treating diesel engine exhaust gas depicted in Figure 11. In Figure 11, 5-1 denotes a main collecting pipe; 51-1 denotes a tubular collecting part; 51-1A, 51-1B, and 51-1N denote a small-diameter collecting part, an intermediate-diameter collecting part, and a large-diameter collecting part, respectively; 51-1A-2W, 51-1B-2W, and 51-1N-2W denote a weak-average-electric-field electrode part; and 51-1A-2P, 51-1B-2P, and 51-1N-2P denote a strong-average-electric-field electrode part.

Test conditions of the marine diesel engine in this Example is depicted in Table 1, and dimensions of each part of the electrostatic precipitator for treating diesel engine exhaust gas and a voltage value and a current value suppled from the high-voltage power supply device are depicted in Table 2.

### [Conventional Examples 1 and 2]

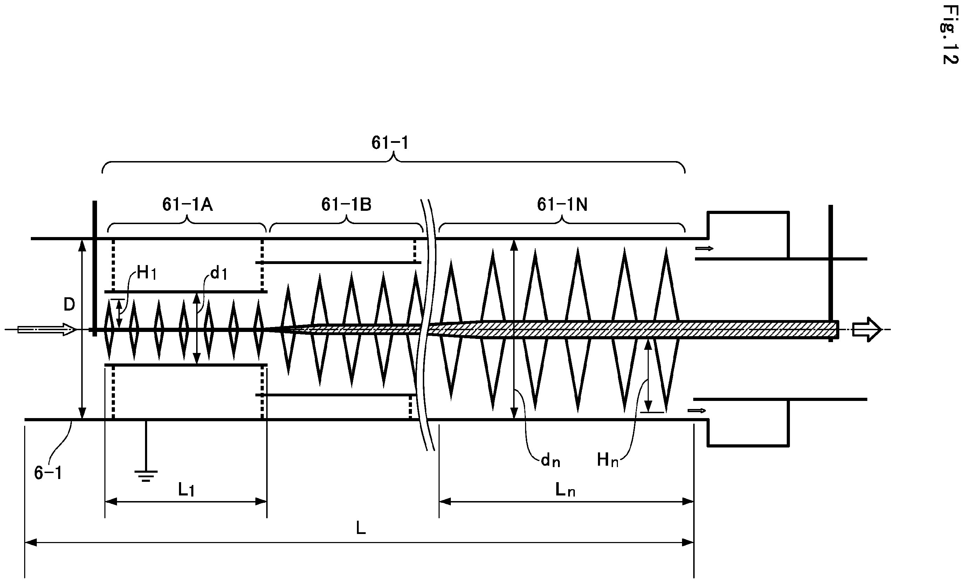

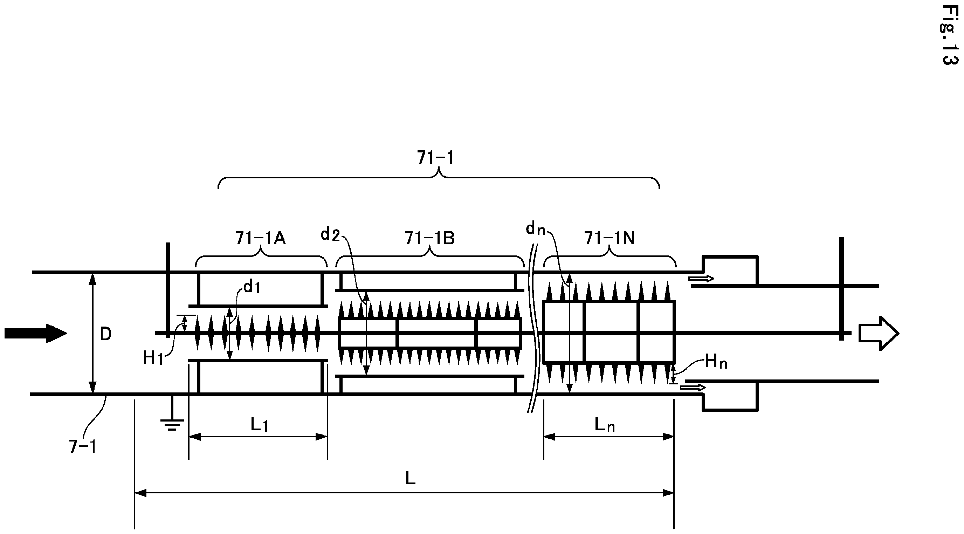

The same marine diesel engine as that in Example 1 with the test conditions depicted in Table 1 is used to investigate consumption power of use high-pressure power supply devices equipped with conventional electrostatic precipitators for treating diesel engine exhaust gas depicted in Figure 12 and Figure 13. In Figure 12 and Figure 13, 61-1 and 71-1 each denote a tubular collecting part; 61-1A and 71-1A each denote a small-diameter collecting part; 61-1B and 71-1B each denote an intermediate-diameter collecting part; and 61-1N and 71-1N each denote a large-diameter collecting part.

Dimensions of each part of the electrostatic precipitators for treating diesel engine exhaust gas of the Conventional Examples 1 and 2 and voltage values and current values suppled from the high-voltage power supply device are depicted in Table 3 and Table 4, respectively.

### [Test Results and Superiority of Present Invention]

From the results shown in Table 2, Table 3, and Table 4, it is recognized that the present invention is excellent in view of constant power consumption because of the facts that the current value with a constant set voltage of 37 kV of the high-pressure power supply device is 18 mA when the electrostatic precipitators for treating diesel engine exhaust gas having the discharge electrodes of the present invention configured with at least one set of a weak-average-electric-field electrode part and a strong-average-electric-field electrode part disposed in one tubular collecting module part is employed, whereas the current value in Conventional Example 1 is 40 mA and the current value in Conventional Example 2 is 38 mA.

Also, as for a spark, it occurs at a lower voltage in the long discharge electrodes of Conventional Examples, compared with the short discharge electrodes of the present invention. Thus, a higher voltage can be set in the short discharge electrodes of the present invention, and it can be said that the present invention is excellent also in view of reliable collection of PM while the occurrence of a spark is prevented.

**[Table 1]**

| |
|---|
| Engine: Marine diesel engine |
| Engine type: Two-stroke low-speed engine |
| The number of cylinders: three |
| Bore × stroke: 330 mmm × 1,050 mm |
| Turbocharger and intercooler: attached |
| Output × rotation speed: 1,275 kW × 162 rpm |
| EGR ratio: 0% |
| Fuel: A fuel oil (0.09 mass% of sulfur) |
| Load ratio: 50% |
| Treatment amount of exhaust gas: Treatment of exhaust gas of 3200 m³/h diverted from the exhaust pipe |

**[Table 2]**

| |
|---|
| Main collecting pipe: |
| •Pipe diameter D=400 mm |
| •Length L=4490 mm |
| The uppermost stream collecting module to a collecting module at an n-th stage: n=five stages |
| Diameters of the collecting modules: |
| d1=200 mm, d2=250 mm, |
| d3=300 mm, d4=350 mm, |
| d5=400 mm |
| Length of the collecting modules: L1 to L5=685 mm each The number of columns of discharge electrodes for each collecting module: |
| first stage=16 columns, second stage=20 columns |
| third stage=24 columns, fourth stage=28 columns |
| fifth stage=32 columns |
| Length of the discharge electrodes (the same for each collecting module and each column): 475 mm |
| Specs of the discharge electrodes (the same for each collecting module and each column): |
| -•Shape of the discharge electrodes on the upstream side: five saw-blade-shaped electrodes over a length of 125 mm for each column, the electrodes each having an approximately isosceles triangular shape |
| -•Shape of the discharge electrode on the downstream side: one flat-plate-shaped electrode over a length of 350 mm for each column |
| -•Spacing in an axial circumferential direction of the saw-blade-shaped electrode: approximately 25 mm constantly |
| -•Height of the saw-blade-shaped and flat-plate-shaped electrodes: H1, H2, H3, H4, H5=20 mm each |
| -•Tip gap (distance between tips and the collecting wall for both of the saw-blade-shaped and flat-plate-shaped electrodes): 50 mm constantly |
| Voltage supplied from the high-voltage power-supply device: 37 kV |
| Current supplied from the high-voltage power-supply device: 18 mA |

**[Table 3]**

| |
|---|
| Main collecting pipe: |
| •Pipe diameter D=400 mm |
| •Length L=4490 mm |
| The uppermost stream collecting module to a collecting module at an n-th stage: n=five stages Diameters of the collecting modules: |
| d1=200 mm, d2=250 mm, |
| d3=300 mm, d4=350 mm, |
| d5=400 mm |
| Length of the collecting modules: L1 to L5=685 mm each The number of columns of discharge electrodes for each collecting module: |
| first stage=16 columns, second stage=20 columns |
| third stage=24 columns, fourth stage=28 columns |
| fifth stage=32 columns |
| Length of the discharge electrodes (the same for each collecting module and each column): 475 mm |
| Specs of the discharge electrodes (the same for each collecting module and each column): |
| -•Shape of the discharge electrodes: twenty-five saw-blade-shaped electrodes for each column, the electrodes each having an approximately isosceles triangular shape |
| -•Height of the saw blades: |
| H1=30 mm, H2=45 mm, H3=50 mm, |
| H4=75 mm, H5=100 mm |
| -•Spacing in an axial circumferential direction of the saw blades: approximately 25 mm constantly |
| -•Tip gap (distance between saw blade tips and the collecting wall): 50 mm constantly Voltage supplied from the high-voltage power-supply device: 37 kV |
| Current supplied from the high-voltage power-supply device: 40 mA |

**[Table 4]**

| |
|---|
| Main collecting pipe: |
| •Pipe diameter D=400 mm |
| •Length L=4490 mm |
| The uppermost stream collecting module to a collecting module at an n-th stage: n=five stages |
| Diameters of the collecting modules: |
| d1=200 mm, d2=250 mm, |
| d3=300 mm, d4=350 mm, |
| d5=400 mm |
| Length of the collecting modules: L1 to L5=685 mm each The number of columns of discharge electrodes for each collecting module: |
| first stage=16 columns, second stage=20 columns |
| third stage=24 columns, fourth stage=28 columns |
| fifth stage=32 columns |
| Length of the discharge electrodes (the same for each collecting module and each column): 475 mm |
| Specs of the discharge electrodes (the same for each collecting module and each column): |
| -•Shape of the discharge electrodes: twenty-five saw-blade-shaped electrodes for each column, the electrodes each having an approximately isosceles triangular shape |
| -•Height of the saw blades: |
| H1, H2, H3, H4, H5=20 mm each |
| -•Spacing in an axial circumferential direction of the saw blades: approximately 25 mm constantly |
| -•Tip gap (distance between saw blade tips and the collecting wall): 50 mm constantly Voltage supplied from the high-voltage power-supply device: 37 kV |
| Current supplied from the high-voltage power-supply device: 38 mA |

### Reference Signs List

1...electrostatic precipitation part
1-1...main collecting pipe
1-2a...electrode rod
11-1...tubular collecting part
11-1A...small-diameter collecting part
11-1B...intermediate-diameter collecting part
11-1C...large-diameter collecting part
11-1A-1...small-diameter collecting pipe
11-1B-1...intermediate-diameter collecting pipe
11-1C-1...large-diameter collecting pipe
11-1A-2, 11-1B-2, 11-1C-2...discharge electrode
11-1A-2W, 11-1B-2W, 11-1C-2W...weak-average-electric-field electrode part
11-1A-2P, 11-1B-2P, 11-1C-2P...strong-average-electric-field electrode part
11-1A-2w, 11-1B-2w, 11-1C-2w, 11-1A-2p...electrode needle
11-1B-2t, 11-1C-2t...electrode barrel
11-1B-2s, 11-1C-2s...stay
11-1B-2p, 11-1C-2p...flat plate
2... electrostatic precipitation part
2-1...main collecting pipe,
2-2a...electrode rod
21-1...tubular collecting part
21-1A...small-diameter collecting part
21-1B...intermediate-diameter collecting part
21-1C...large-diameter collecting part
21-1A-1...small-diameter collecting pipe
21-1B-1...intermediate-diameter collecting pipe
21-1C-1...large-diameter collecting pipe
21-1A-2, 21-1B-2, 21-1C-2...discharge electrode
21-1A-2W, 21-1B-2W, 21-1C-2W...weak-average-electric-field electrode part
21-1A-2P, 21-1B-2P, 21-1C-2P...strong-average-electric-field electrode part
21-1A-2w, 21-1B-2w, 21-1C-2w...electrode needle
21-1B-2t, 21-1C-2t...electrode barrel
21-1B-2s, 21-1C-2s...stay
21-1B-2M, 21-1C-2M...flat plate
21-1B-2m, 21-1C-2m...short-needle-shaped electrode needle
3-1...main collecting pipe,
3-2a...electrode rod
31-1...tubular collecting part
31-1B...intermediate-diameter collecting part
31-1B-1...intermediate-diameter collecting pipe
21-1A-1s, 21-1B-1s, 31-1B-1s, 31-1B-2s...stay
31-1B-2t...electrode barrel
31-1B-2W...weak-average-electric-field electrode part
31-1B-2P...strong-average-electric-field electrode part
31-1B-2w...electrode needle
31-1B-2M...flat plate
31-1B-2m...short-needle-shaped electrode needle
31-1B-2c...cone edge ring
31-1B-2cr...leak hole
4-1...main collecting pipe
4-2a...electrode rod
41-1...tubular collecting part
41-1B...intermediate-diameter collecting part
41-1B-1...intermediate-diameter collecting pipe
41-1B-1s, 41-1B-2s...stay
41-1B-2t...electrode barrel
41-1B-2W...weak-average-electric-field electrode part
41-1B-2P...strong-average-electric-field electrode part
41-1B-2w...electrode needle
41-1B-2M...flat plate
41-1B-2a...I-shaped plate electrode
41-1B-2b...L-shaped bent part
41-1B-2c...J-shaped curved part
5-1, 6-1, 7-1...main collecting pipe
51-1, 61-1, 71-1...tubular collecting part
51-1A, 61-1A, 71-1A...small-diameter collecting part
51-1B, 61-1B, 71-1B...intermediate-diameter collecting part
51-1C, 61-1C, 71-1C... large-diameter collecting part
a...collecting pipe
b, e, f...discharge plate electrode
c...electrode rod
d...electrode barrel

## Claims

1. Discharge electrodes of an electrostatic precipitator for treating diesel engine exhaust gas, being discharge electrodes of a diesel engine exhaust gas treatment apparatus, comprising an electrostatic precipitation part having a multistage-type precipitation wall structure in which a plurality of tubular collecting modules are disposed in a main collecting pipe in a pipe axial direction, wherein
spacing between the discharge electrodes in each of the tubular collecting modules in the pipe axial direction (spacing in a flow direction of the exhaust gas) is arranged to be wide on an upstream side in each of the tubular collecting modules and to be narrow on a downstream side therein, to make a weak-average-electric-field electrode part on the upstream side in each of the tubular collecting modules and a strong-average-electric-field electrode part on the downstream side therein.

2. Discharge electrodes of an electrostatic precipitator for treating diesel engine exhaust gas, being discharge electrodes of a diesel engine exhaust gas treatment apparatus formed of an electrostatic precipitation part in a multistage-type precipitation wall structure in which a plurality of tubular collecting modules are disposed in a main collecting pipe in a pipe axial direction, wherein
spacing between the discharge electrodes in each of the tubular collecting modules in the pipe axial direction (spacing in a flow direction of the exhaust gas) is arranged to be wide on an upstream side in each of the tubular collecting modules, and flat-plate-shaped discharge electrodes are disposed on a downstream side of each of the tubular collecting module, to make a weak-average-electric-field electrode part on the upstream side of each of the tubular collecting modules and to make a strong-average-electric-field electrode part on the downstream side thereof.

3. Discharge electrodes of an electrostatic precipitator for treating diesel engine exhaust gas, being discharge electrodes of a diesel engine exhaust gas treatment apparatus, comprising: an electrostatic precipitating means having a tubular collecting part with a predetermined length which configures the discharge electrodes for charging particulate matter contained in exhaust gas from a diesel engine using fuel oil and a precipitation electrode for collecting the particulate matter charged, the discharge electrodes being configured of a main electrode disposed in the tubular collecting part in a pipe axial direction or the discharge electrodes being disposed in an electrode barrel provided on the main electrode to protrude in a radial direction with a large diameter; and tubular collecting modules short in the pipe axial direction and having different diameters being arranged at a plurality of stages in the tubular collecting part formed of a main collecting pipe formed of the discharge electrodes and the precipitation electrode and having a single diameter and a predetermined length, wherein:
the discharge electrodes of at least one of the tubular collecting modules arranged at the plurality of stages are any one or combination of discharge electrode needles, low-height saw-blade-shaped discharge plates, and saw-blade-shaped discharge electrode plates having low-height saw-blade-shaped discharge plate parts, or low-height annular discharge electrodes, arranged in the pipe axial direction directly or indirectly with desired spacing on an outer circumferential surface of the main electrode in a circumferential direction with a large diameter in the radial direction; and
spacing between the discharge electrodes at outer circumferential ends thereof in the radial direction is widely arranged in the pipe axial direction to dispose a weak-average-electric-field electrode part with a weak average electric field intensity between tips of the discharge electrodes and the precipitation electrode on an upstream side of an exhaust gas flow in the tubular collecting module, while the spacing between the discharge electrodes is narrowly arranged to dispose a strong average electric field electrode part with a strong average electric field intensity between the tips of the discharge electrodes and the precipitation electrode on a downstream side in a flow direction of the exhaust gas in the tubular collecting module.

4. Discharge electrodes of an electrostatic precipitator for treating diesel engine exhaust gas, being discharge electrodes of a diesel engine exhaust gas treatment apparatus, comprising: an electrostatic precipitating means having a tubular collecting part with a predetermined length which configures the discharge electrodes for charging particulate matter contained in exhaust gas from a diesel engine using fuel oil and a precipitation electrode for collecting the particulate matter charged, the discharge electrodes being configured of a main electrode disposed in the tubular collecting part in a pipe axial direction or the discharge electrodes being disposed in an electrode barrel provided on the main electrode to protrude in a radial direction with a large diameter; and tubular collecting modules short in the pipe axial direction and having different diameters being arranged at a plurality of stages in the tubular collecting part formed of a main collecting pipe formed of the discharge electrodes and the precipitation electrode and having a single diameter and a predetermined length, wherein
the discharge electrodes of at least one of the tubular collecting modules arranged at the plurality of stages are any one or combination of discharge electrode needles, low-height saw-blade-shaped discharge plates, and saw-blade-shaped discharge electrode plates having low-height saw-blade-shaped discharge plate parts, or low-height annular discharge electrodes, arranged in the pipe axial direction directly or indirectly in a circumferential direction with desired spacing on an outer circumferential surface of the main electrode with a large diameter in the radial direction,
spacing between the discharge electrodes at outer circumferential ends thereof in the radial direction is widely arranged in the pipe axial direction to dispose a weak-average-electric-field electrode part with a weak average electric field intensity between tips of the discharge electrodes and the precipitation electrode on an upstream side of an exhaust gas flow in the tubular collecting module, and
flat-plate-shaped discharge electrodes arranged in the pipe axial direction directly or indirectly in the circumferential direction on the outer circumferential surface of the main electrode with a large diameter in the radial direction are disposed on a downstream side in a flow direction of the exhaust gas in the tubular collecting module to dispose a strong average electric field electrode part with a strong average electric field intensity between the tips of the flat-plate-shaped discharge electrodes and the precipitation electrode.

5. The discharge electrodes of the electrostatic precipitator for treating diesel engine exhaust gas according to any one of claims 1 to 4, wherein the discharge electrodes are configured with at least one set of the weak-average-electric-field electrode part and the strong-average-electric-field electrode part disposed in one tubular collecting module part.

6. The discharge electrodes of the electrostatic precipitator for treating diesel engine exhaust gas according to any one of claims 1 to 5, wherein the strong-average-electric-field electrode part is configured with a plurality of sets of discharge plates disposed on a flat-plate-shaped base part, the discharge plates having recessed and protruding parts formed of short discharge electrode needles or low-height saw blades with dense disposition spacing in the pipe axial direction.

7. The discharge electrodes of the electrostatic precipitator for treating diesel engine exhaust gas according to any one of claims 1 to 6, wherein the strong-average-electric-field electrode part is configured with a plurality of sets of discharge plates disposed, each with a cross-sectional shape at a tip of the flat-plate-shaped base part in the radial direction having an I-shaped flat-plate shape, a J-shaped curved part oriented to the circumferential direction, or an L-shaped bent part.
